Europäisches Patentamt

European Patent Office

Office européen des brevets

(11) Publication number: 0 239 305
A1

## EUROPEAN PATENT APPLICATION

(21) Application number: 87302283.4

(22) Date of filing: 17.03.87

(51) Int. Cl.⁴: **B01D 39/20** , C22B 9/02 ,
B22D 43/00

(30) Priority: 17.03.86 GB 8606539

(43) Date of publication of application:
30.09.87 Bulletin 87/40

(84) Designated Contracting States:
BE DE FR IT

(71) Applicant: EAST LONDON MICA LIMITED
Ringwood Road
London E17 8PP(GB)

(72) Inventor: Weiss, Stephen Stewart
28 Camden Square
London NW1 9XA(GB)

(74) Representative: Shaw, Laurence
George House George Road
Edgbaston Birmingham B15 1PG(GB)

(54) Filter device and method.

(57) A filter device comprises a board (1) or the like
of mica and a binder, which has been perforated (2)
and is useful in the filtering of molten metals.

FIG.1.

EP 0 239 305 A1

## FILTER DEVICE AND METHOD

The invention relates to a filter device, and more particularly to such a device useful in the filtering of molten metals.

According to one aspect of the invention there is provided a filter device comprising a body formed of bonded mica, the body having a thickness of from about 0.2 mm to about 1 mm, perforations extending through the thickness of the body.

Most preferably the body is in sheet or other flat form. The mica may be derived from a wide range of natural and synthetic micas such as muscovite, phlogopite, biotite, lepidolite and synthetic fluorophlogopite. The choice of which mica to use will depend on the purpose to which the filter device is to be put. In general muscovite is suitable for use at lower temperatures, whereas phlogopite and synthetic fluorophlogopite are useful at higher temperatures, up to about 1400°C.

The body may range in thickness and thicker versions will be better used at higher temperatures or for larger castings. The body may have layers of other materials such as ceramic or other refractory flux.

The body may be formed in a variety of ways. Preferably the mica is bonded to form the body, using a binder such as a resin binder or inorganic binder, eg. silicone or silicate respectively. The binder chosen will depend on the temperature to which the filter device is to be exposed. The body may be formed by laminating sheets of mica paper using a binder or a slurry of particles of mica and the binder may be pressed into a shape, eg. a sheet and then dried.

The body is then perforated using a suitable perforating tool. The number, shape and density of the perforations may be varied according to the desired porosity. The porosity may range from about 20% to about 50% of the surface area. The hole diameter may range from about 1 mm to about 5 mm.

In another aspect, the invention provides a method of filtering molten metal comprising interposing a filter device of the invention in the path of the molten metal to cause it to pass through the perforations.

The filter device may be used in a horizontal or vertical disposition, in a filter box in a passageway through which the molten metal must pass such as a runner channel or gating system.

The filter device may simply be placed over a sprue hole, in the absence of a special seating. The filter device will act as a choke or strainer during the pour, which will reduce dross and like contamination of the cast metal. Another advantage of the filter device of this invention is that it does not of itself cause contamination, eg. inclusions, of the molten metal being cast. When say a metal filter is interposed in the runner system between the inlet and the pattern, the metal filter must be cut away before the solidified metal in the runner system at the end of casting can be recovered for remelting. In contrast, a filter device of this invention can be passed to the remelting while still embedded in the solidified metal because on remelting the device will float to the top and can be skimmed off.

The filter device may be used in the casting of molten metal (including alloys) such as aluminium, brass, bronze, copper, iron and the like. It is a surprising feature of the invention that a perforated body, eg. sheet or board as defined, can be used in the filtering of such metals and alloys at the temperatures at which they are molten.

The invention is illustrated with reference to the accompanying diagrammatic drawings, in which

Figure 1 is a plan view of a filter device

Figure 2 is a sectional view of a casting mould including the filter device of Figure 1

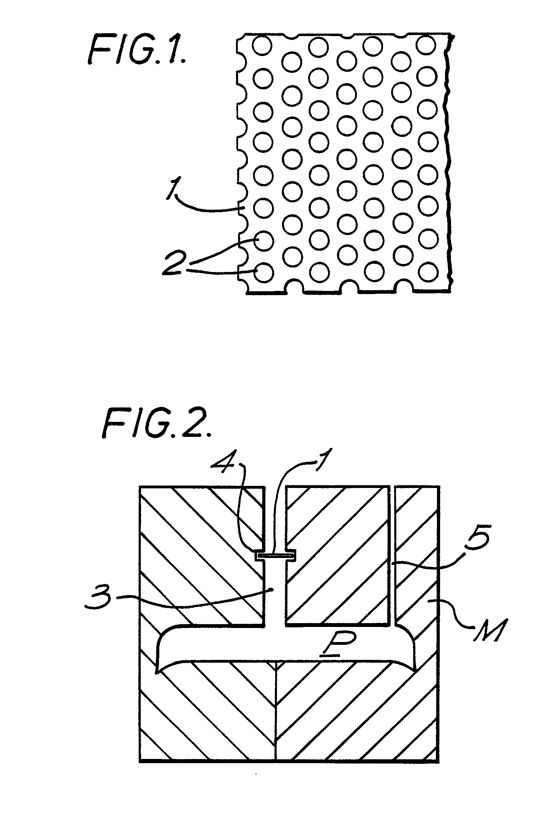

The filter device comprises a board 1 of sheets of mica paper laminated together using a silicone binder. The board is about 0.5 mm thick and is perforated so that 42% of its surface area is covered with holes 2 each measuring 1.5mm in diameter. The holes straight sides and are parallel to each other. The device of Figure 1 is located in the upper half of an inlet 3 of a runner system of a two part mould M containing a pattern P to form the front face of an aluminium instrument panel. The inlet duct is about 20mm in diameter and a ledge 4 is present to receive a device 1 measuring about 60mm in diameter. The inlet duct leads to the pattern P and an outlet duct 5 serves as a vent passage. Molten aluminium is cast into the inlet via the filter device which holds back dross and like contamination. At the end of casting the metal in the inlet duct solidifies and the filter device 1 is trapped therein. The mould M is opened, the casting removed and the length of the metal in the duct 3 cut off. The cast panel is removed for machining etc. The length of solidified metal from the runner is remelted and the filter device 1 is released thereby and floats to the top of the molten metal when it can be picked off.

In order that the invention may be well understood it will now be described by way of illustration, with reference to the following examples:

## Example I

A mica sheet, about 0.5 mm thick, formed of silicone bonded layers of phlogopite mica paper was perforated with holes about 2 mm in diameter and in sufficient density to give a porosity of about 30% of the surface area. The filter device was placed over the sprue of a foundry mould. About 73 kg of gunmetal at 1200°C was cast through the filter device in a period of about 35 seconds. The filter device was readily recovered.

## Example II

The method of Example I was repeated in the casting of an aluminium alloy at about 800°C and good results were obtained. At the end of casting, the solidified metal in the runner system containing the trapped filter device was remelted and the device was skimmed off for disposal. The recovered metal was then used in another casting process.

## Claims

1. A filter device comprising a body formed of bonded mica, the body having a thickness of from about 0.2mm to about 1mm, perforations extending through the thickness of the body.

2. A filter according to Claim 1, wherein the body is in sheet or other flat form.

3. A filter according to Claim 1, wherein the mica is a natural or synthetic mica.

4. A filter according to Claim 3, wherein the mica is selected from muscovite, phlogopite, biotite, lepidolite and synthetic fluorophogite.

5. A filter according to any preceding Claim, wherein the body comprises layers of laminations of mica paper bonded together by a resin such as silicone.

6. A filter according to any preceding Claim, wherein the body comprises a sheet or like shaped body formed from a pressed and dried slurry of mica particles and binder.

7. A filter according to Claim 6, wherein the body has a porosity of from about 20% to about 50% of the surface area and the hole diameter ranges from about 1mm to 5mm.

8. A method of filtering molten metal comprising interposing a filter device comprising a body formed of bonded mica, the body having a thickness of from about 0.2mm to about 1mm, perforations extending through the thickness of the body, in the path of the molten metal to cause it to pass through the perforations.

9. A method according to Claim 8, wherein the filter is used in a horizontal or vertical disposition, in a filter box in a passageway through which the molten metal must pass.

10. A method according to Claim 8 or 9, wherein the filter is placed over a sprue hole.

11. A method according to Claim 8, 9 or 10, wherein the filter is used in the casting of molten metal such as aluminium brass, bronze, copper, iron or the like.

12. A method of making a filter body comprising bonding together sheets of mica paper using a binder or making a slurry of mica particles and binder and pressing and drying to form a sheet and then perforating.

**FIG.1.**

**FIG.2.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 835 007 (HOEFER)<br><br>* Figures 1-3; column 2, lines 3-10; column 3, lines 8-14; claims * | 1-3,5, 8-10, 12 | B 01 D 39/20<br>C 22 B 9/02<br>B 22 D 43/00 |
| Y | | 6 | |
| A | | 4,11 | |
| | --- | | |
| Y | GB-A- 666 867 (BRITISH THOMSON-HOUSTON CO. LTD)<br>* Claim 1; page 2, lines 70-71; page 1, lines 26-32 * | 6 | |
| A | | 1-5,8, 9 | TECHNICAL FIELDS SEARCHED (Int. Cl.4) |
| | --- | | B 01 D<br>B 22 D |
| A | FR-A-1 137 569 (SIEMENS-SCHUCKERTWERKE AG)<br>* Claims 3,6,10 * | 1,6,8, 12 | C 22 B<br>C 04 B |
| | --- | | |
| A | CH-A- 187 051 (STÖSSEL)<br><br>* Claims 1,2,6-9 * | 1,6,8, 12 | |
| | ---    -/- | | |

The present search report has been drawn up for all claims

| Place of search | Date of completion of the search | Examiner |
|---|---|---|
| THE HAGUE | 15-06-1987 | CZECH B.P. |

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl.4) |
|---|---|---|---|
| A | FR-A-2 183 624  (WUSTROW) <br><br> * Claims 1-4 * <br><br> --- | 1,6,8, 12 | |
| A | FR-A-2 236 913  (LA VERMICULITE ET LA PERLITE S.A. ET SOCIETE NATIONALE DES PETROLES D'AQUITAINE) <br> * Claims 1-5,8-10 * <br><br> --- | 1,4,6, 8,12 | |
| A | JOURNAL OF THE AMERICAN CERAMIC SOCIETY, vol. 65, no. 9, September 1982, page C-142, Columbus, Ohio, US; T. HATTORI et al.: "Fabrication of nonadditive mica ceramics by hot isostatic processing" <br> * Left-hand column, paragraph 2 * <br><br> ----- | 1,4,6, 8,12 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 15-06-1987 | CZECH B.P. |